# EUROPÄISCHE PATENTSCHRIFT

(11) **EP 2 531 390 B1**
(45) Veröffentlichungstag und Bekanntmachung des Hinweises auf die Patenterteilung: **21.05.2014**
(21) Anmeldenummer: 11711257.3
(22) Anmeldetag: 04.02.2011
(51) Int. Cl.: A47C 7/44, F16F 3/02, B61G 11/04, A47C 7/14, F16F 1/02, F16F 1/18, F16F 1/368

(54) **RINGFEDER UND FEDERANORDNUNG**
ANNULAR SPRING AND SPRING ARRANGEMENT
RESSORT-BAGUE ET AGENCEMENT À RESSORT

(30) Priorität: 04.02.2010 DE 102010007590
(43) Veröffentlichungstag der Anmeldung: 12.12.2012
(73) Patentinhaber: Universität Bremen, 28334 Bremen (DE); Hochschule für Künste, 28217 Bremen (DE)
(72) Erfinder: SIMON, Michel, 28844 Weyhe (DE); PUROL, Holger, 88696 Owingen (DE)
(74) Vertreter: Philipp, Matthias
(86) Internationale Anmeldenummer: PCT/DE2011/000105
(87) Internationale Veröffentlichungsnummer: WO 2011/095160

(56) Entgegenhaltungen:
- WO-A1-2009/061125
- DE-A1- 3 809 008
- DE-B- 1 143 678
- DE-C- 620 791
- DE-C- 848 456
- GB-A- 481 970
- US-A- 1 922 339
- US-A- 4 688 851
- US-A- 5 897 106

## Beschreibung

Die Erfindung betrifft eine Ringfeder mit einem offenen Ringkörper aus einem federelastischen Material, der sich von einem ersten Ende über einen Umfangswinkel, bezüglich einer Ringachse, von mindestens 220° bis zu einem zweiten Ende erstreckt.

Ringfedern mit offenen oder geschlitzten Ringkörper sind beispielsweise aus der DE 1 143 678 B, DE 896 277, US 1,629,224 oder GB 342,557 bekannt. Derartige Federn dienen im Verbund mit Halteringen oder sonstigen Halteanordnungen zur Aufnahme und Dämpfung von Druckkräften wie beispielsweise in Eisenbahnpuffern.

Die Aufgabe der vorliegenden Erfindung besteht darin, eine besonders flexibel nutzbare Feder für beispielsweise Fahrräder, Bürostühle oder Rollstühle bereitzustellen.

Diese Aufgabe wird erfindungsgemäß durch eine gattungsgemäße Ringfeder gelöst, die sich dadurch auszeichnet, dass der Ringkörper radial zu der Ringachse eine Dicke aufweist, die von dem ersten Ende bis zu dem zweiten Ende kontinuierlich oder stufenweise zunimmt, wobei die Dicke innerhalb eines Umfangswinkelbereichs von maximal 60° konstant ist.

Vorteilhafterweise erstreckt sich der Ringkörper über mehr als 240°, 260°, 280°, 300°, 320°, 340° oder 360° in Umfangsrichtung.

Es kann vorgesehen sein, der Umfangswinkelbereich, innerhalb dessen die Dicke konstant sein kann, höchstens 40°, 30°, 20°, 10°, 5° oder 2° beträgt.

In einer Ausführungsform ist vorgesehen, dass die Dicke kontinuierlich und proportional oder über- oder unterproportional zum Umfangswinkel zunimmt.

Der Ringkörper kann eine zylindrische Innenfläche oder eine zylindrische Außenfläche aufweisen.

In einer anderen Ausführungsform kann vorgesehen sein, dass der Ringkörper eine mehreckige Form mit geraden Teilstücken aufweist, wobei die Dicke in jedem Teilstück zumindest abschnittsweise konstant ist oder kontinuierlich über den Umfangswinkel zunimmt.

Grundsätzlich kann der Ringkörper in Richtung der Ringachse eine beliebige Länge aufweisen, die beispielsweise zwischen dem Ein- und Fünfzigfachen seiner größten Dicke liegen kann.

Der Ringkörper kann an jeder Stelle eine gleiche Länge aufweisen, oder er kann eine in Richtung der Ringachse mit dem Umfangswinkel veränderliche Länge aufweisen. Im letztgenannten Fall kann die Länge von dem ersten Ende bis zu dem zweiten Ende kontinuierlich oder stufenweise zunehmen.

Weiter kann vorgesehen sein, dass an dem ersten Ende und/oder an dem zweiten Ende eine Abwinkelung oder Abkantung angeordnet ist.

Die Erfindung betrifft ferner eine Federanordnung nach Anspruch 13. Dabei kann vorgesehen sein, dass die Ringfeder innerhalb eines Verstellbereichs von mindestens 60°, 90° oder 120° Umfangswinkel verstellbar ist.

Weitere Vorteile und Merkmale der Erfindung ergeben sich aus der nachfolgenden Beschreibung von zwei Ausführungsbeispielen, wobei auf eine Zeichnung Bezug genommen ist, in der
Fig. 1 eine schematische perspektivische Ansicht eines ersten Ausführungsbeispiels der Erfindung zeigt,
Fig. 2 eine schematische perspektivische Ansicht eines zweiten Ausführungsbeispiels zeigt,
Fig. 3 unterschiedliche Federhärten einer erfindungsgemäßen Ringfeder in unterschiedlichen Positionen zeigt,
Fig. 4 eine Variante der Erfindung zeigt, und
Fig. 5 - 7 unterschiedliche Federhärten einer erfindungsgemäßen Ringfeder bei Anwendung in einer Federanordnung für einen Rollstuhl erläutern.

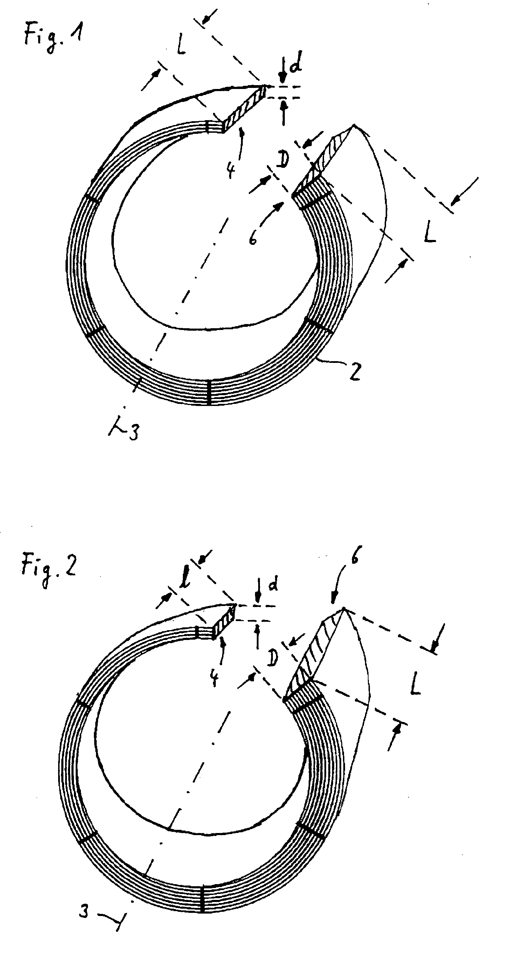

Fig. 1 zeigt in einer perspektivischen Ansicht den grundsätzlichen Aufbau einer erfindungsgemäßen Ringfeder, die einen sich in einer Umfangsrichtung über einen Umfangswinkel von nahezu 360°, bezogen auf eine Ringachse 3, erstreckenden Ringkörper 2 aufweist, mit einem ersten Ende 4, an dem der Ringkörper eine in radialer Richtung verlaufende Dicke d aufweist, bis zu einem zweiten Ende 6, an dem der Ringkörper eine größere Dicke D aufweist. Zwischen dem ersten Ende 4 und dem zweiten Ende 6 nimmt die Dicke des Ringkörpers kontinuierlich zu, und zwar im dargestellten Ausführungsbeispiel annähernd oder genau proportional oder linear zum Umfangswinkel. Die Länge L des Ringkörpers entlang der Ringachse 3 ist konstant und nicht vom Umfangswinkel abhängig.

Fig. 2 zeigt eine Variante der erfindungsgemäßen Ringfeder, bei der die Zunahme der Dicke zwischen einem Maß d am ersten Ende 4 und D am zweiten Ende 6 ebenso ist wie bei dem ersten Ausführungsbeispiel nach Fig. 1, wobei allerdings die Länge des Ringkörpers 2 von einem Maß 1 am ersten Ende 4 kontinuierlich zunimmt bis auf ein größeres Maß L am zweiten Ende 6, und zwar hier proportional oder linear zum Umfangswinkel.

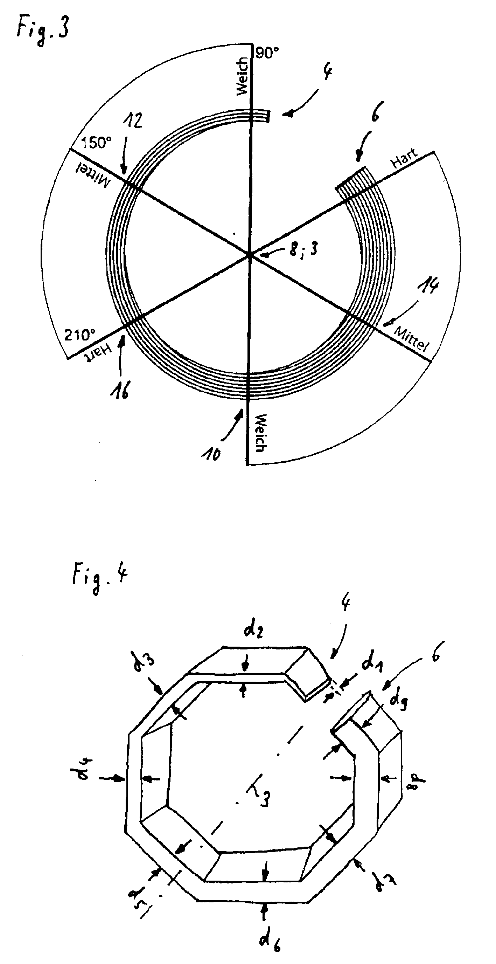

Fig. 3 erläutert unterschiedliche Federhärten der Ringfeder, die bei einer Beaufschlagung mit Kräften aus entgegengesetzten Richtungen auftreten. Bei einer Krafteinleitung am ersten Ende 4 und an einer bezüglich eines auf der Ringachse 3 liegenden, gedachten Mittelpunkts 8 diametral gegenüberliegenden ersten Krafteinleitungsstelle 10 ergibt sich eine relativ weiche Federcharakteristik. Bei einer in Umfangsrichtung um etwa 60° versetzten Krafteinleitung an zwei zweiten Krafteinleitungsstellen 12, 14 ergibt sich eine mittlere Federcharakteristik, und bei einer nochmals um ca. 60° in Umfangsrichtung versetzten Krafteinleitung zwischen dem zweiten Ende 6 und einer bezüglich des Mittelpunkts 8 diesem gegenüberliegenden dritten Krafteinleitungsstelle 16 eine harte Federcharakteristik, wobei ersichtlich beliebige Zwischenpositionen möglich sind, die eine stufenlose Einstellbarkeit der Federhärte oder Federkonstanten ermöglichen.

Fig. 4 erläutert eine weitere Variante der Erfindung, bei der der Ringkörper 2 nicht rund, sondern mehreckig, im dargestellten Beispiel mit um jeweils 45° gegeneinander abgewinkelten Teilstücken, ausgebildet ist. Die Dicke der Teilstücke nimmt stufenweise (d₁, d₂ ..., d₈, d₉) zu, so dass sich entsprechend Fig. 3 eine Anzahl von unterschiedlichen Federhärten dadurch realisieren lässt, dass eine Krafteinleitung jeweils zwischen zwei einander gegenüberliegenden, im Wesentlichen parallel zueinander verlaufenden Teilstücken gewählt wird (d₁ bzw. d₉ und d₅, d₂ und d₆, d₃ und d₇, d₄ und d₈). Alternativ kann die Dicke des Ringkörpers kontinuierlich mit dem Umfangswinkel zwischen den Enden des Ringkörpers zunehmen.

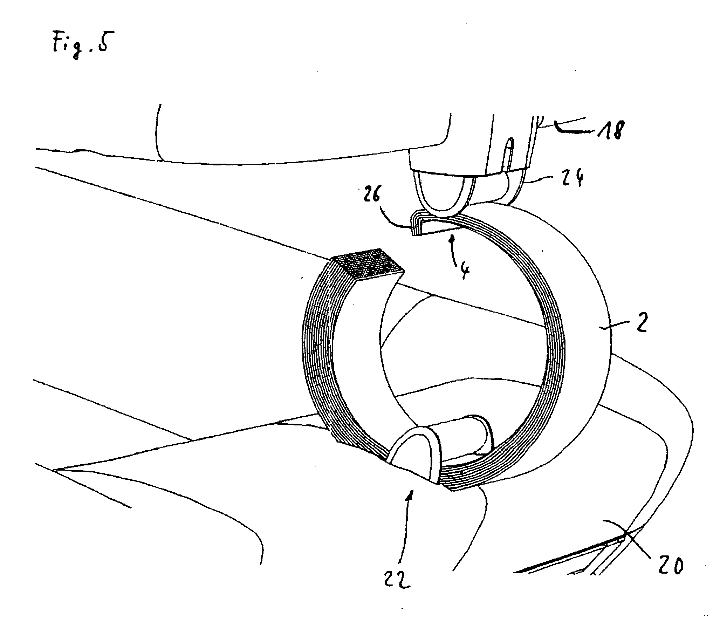

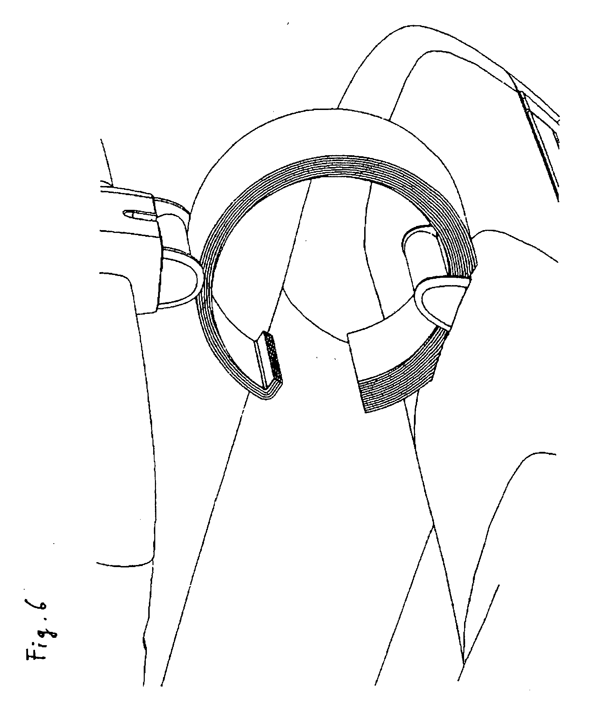

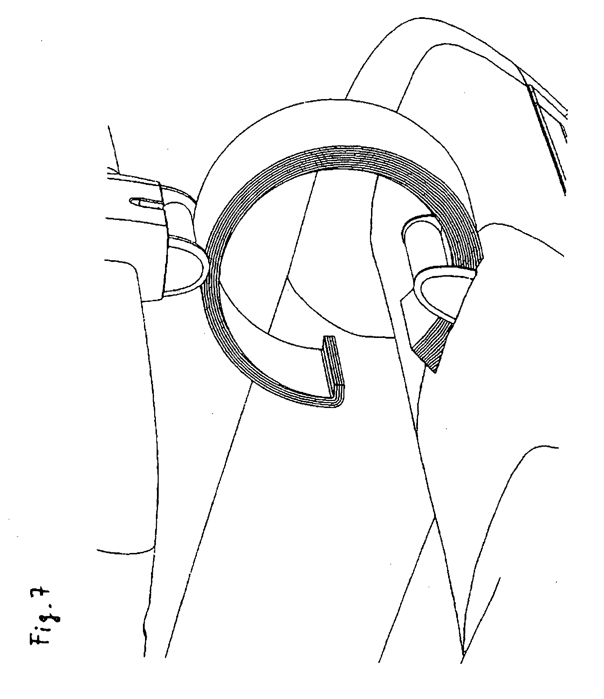

Fig. 5 bis 7 erläutern eine Anwendung der erfindungsgemäßen Ringfeder als stufenlos variabel einzustellendes Federelement zwischen einem ersten Rahmenteil 18 (erste Komponente) und einem zweiten Rahmenteil 20 (zweite Komponente) eines Stuhls, Fahrrads oder Rollstuhls, wobei die Rahmenteile in Richtung zueinander bewegbar sind. Am zweiten Rahmenteil 20 ist eine Klemmhalterung 22 vorgesehen, mit der der Ringkörper 2 an einer beliebigen Umfangsposition klemmend ortsfest gehalten werden kann. Am ersten Rahmenteil 18 ist ein Vorsprung 24 angeordnet, der der Klemmhalterung 22 gegenüberliegt, so dass bei einer Bewegung der Rahmenteile 18, 20 zueinander die Ringfeder zusammengedrückt wird, wobei sie je nach ihrer Drehstellung relativ zu den Rahmenteilen eine einstellbare Federhärte bietet. Bei der dargestellten Ausführungsform ist im Bereich des ersten Endes 4 eine rechtwinklige, nach innen weisende Abkantung 26 vorgesehen, die verhindert, dass sich die Ringfeder unbeabsichtigt aus der Klemmhalterung 22 löst.

Obwohl die Ringfeder aus jedem beliebigen federelastischen Material bestehen kann, zeichnet sich eine bevorzugte Ausführungsform dadurch aus, dass der Ringköper 2 schichtweise aufgebaut ist, beispielsweise aus faserverstärktem Kunststoff, wobei eine oder mehrere äußerste oder innerste Schicht(en) über den gesamten Umfangswinkel verläuft (verlaufen), während daran nach innen oder außen anschließende Schichten nach und nach vom zweiten Ende ausgehend über einen geringeren Umfangswinkel verlaufen, so dass eine schichtweise vom ersten zum zweiten Ende zunehmende Dicke erzielt wird. Obwohl eine zwischen den Enden stufenlos oder kontinuierlich mit dem Umfangswinkel zunehmende Dicke Vorteile bildet, kann eine stufenartig oder schrittweise zunehmende Dicke ebenfalls günstig sein, wobei dann allerdings der Abstand benachbarter Stufen, in Umfangsrichtung gesehen, nicht größer als 60° sein sollte und bevorzugt deutlich kleiner ist, beispielsweise 20°, 10°, 5° oder noch weniger, so dass eine Annäherung an einen stufenlosen Dickenverlauf gegeben ist.

### Bezugszeichenliste

- 2: Ringkörper
- 3: Ringachse
- 4: erstes Ende
- 6: zweites Ende
- 8: Mittelpunkt
- 10: erste Krafteinleitungsstelle
- 12, 14: zweite Krafteinleitungsstelle
- 16: dritte Krafteinleitungsstelle
- 18: erstes Rahmenteil
- 20: zweites Rahmenteil
- 22: Klemmhalterung
- 24: Vorsprung
- 26: Abkantung

- d: Dicke bei 4
- D: Dicke bei 6
- d_{1 ...} d₉: unterschiedliche Dicken
- l: Länge bei 4
- L: Länge bei 6

## Patentansprüche

1. Ringfeder geeignet für die Anwendung zwischen zwei sich aufeinander zubewegenden Komponenten und sich bezüglich eines auf der Ringachse gelagerten Mittelpunktes diametral gegenüberliegenden Stellen zur Krafteinleitung mit einem offenen Ringkörper (2) aus einem federelastischen Material, der sich von einem ersten Ende (4) über einen Umfangswinkel, bezüglich einer Ringachse (3), von mindestens 220° bis zu einem zweiten Ende (6) erstreckt, **dadurch gekennzeichnet, dass** der Ringkörper (2) radial zu der Ringachse eine Dicke (d, D) aufweist, die von dem ersten Ende (4) bis zu dem zweiten Ende (6) kontinuierlich oder stufenweise zunimmt, wobei die Dicke (d, D) innerhalb eines Umfangswinkelbereichs von maximal 60° konstant ist.

2. Ringfeder nach Anspruch 1, **dadurch gekennzeichnet, dass** sich der Ringkörper (2) über mehr als 240°, 260°, 280°, 300°, 320°, 340° oder 360° in Umfangsrichtung erstreckt.

3. Ringfeder nach Anspruch 1 oder 2, **dadurch gekennzeichnet, dass** der Umfangswinkelbereich, innerhalb dessen die Dicke konstant sein kann, höchstens 40°, 30°, 20°, 10°, 5° oder 2° beträgt.

4. Ringfeder nach Anspruch 1 oder 2, **dadurch gekennzeichnet, dass** die Dicke (d, D) kontinuierlich und proportional zum Umfangswinkel zunimmt.

5. Ringfeder nach Anspruch 3, **dadurch gekennzeichnet, dass** die Dicke kontinuierlich und über- oder unterproportional zum Umfangswinkel zunimmt.

6. Ringfeder nach einem der vorangehenden Ansprüche, **dadurch gekennzeichnet, dass** der Ringkörper eine zylindrische Innenfläche aufweist.

7. Ringfeder nach einem der Ansprüche 1 bis 5, **dadurch gekennzeichnet, dass** der Ringkörper eine zylindrische Außenfläche aufweist.

8. Ringfeder nach einem der Ansprüche 1 bis 3, **dadurch gekennzeichnet, dass** der Ringkörper (2) eine mehreckige Form mit geraden Teilstücken aufweist, wobei die Dicke (d₁ ...d₉) in jedem Teilstück zumindest abschnittsweise konstant ist oder kontinuierlich über den Umfangswinkel zunimmt.

9. Ringfeder nach einem der vorangehenden Ansprüche, **dadurch gekennzeichnet, dass** der Ringkörper in Richtung der Ringachse (3) eine Länge (l, L) aufweist, die dem Einbis Fünfzigfachen seiner größten Dicke (D; d₉) entspricht.

10. Ringfeder nach einem der Ansprüche 1 bis 9, **dadurch gekennzeichnet, dass** der Ringkörper in Richtung der Ringachse (3) eine mit dem Umfangswinkel veränderliche Länge (l, L) aufweist.

11. Ringfeder nach Anspruch 10, **dadurch gekennzeichnet, dass** die Länge (l, L) von dem ersten Ende (4) bis zu dem zweiten Ende (6) kontinuierlich oder stufenweise zunimmt.

12. Ringfeder nach einem der Ansprüche, **dadurch gekennzeichnet, dass** an dem ersten Ende (4) und/oder an dem zweiten Ende (6) eine Abwinkelung oder Abkantung (26) angeordnet ist.

13. Federanordnung mit einer ersten Komponente (18), die über eine Ringfeder (2) nach einem der vorangehenden Ansprüche an einer zweiten Komponente (20) federnd mit verstellbarer Federkonstante abgestützt ist.

14. Federanordnung nach Anspruch 13, **dadurch gekennzeichnet, dass** die Ringfeder innerhalb eines Verstellbereichs von mindestens 60°, 90°, oder 120° Umfangswinkel verstellbar ist.

## Claims

1. Annular spring, suitable for use between two components moving towards each other and force-application points diametrally opposing each other, relative to a mid-point lying on a ring axis, comprising an open annular body (2) made of an elastic material, which extends from a first end (4) to a second end (6) over a circumferential angle, relative to the ring axis (3), of at least 220°, **characterized in that** the annular body (2) has a radial thickness (d, D), relative to the ring axis, that increases from the first end (4) to the second end (6) continuously or in steps, wherein the thickness (d, D) is constant within a circumferential angle range of at most 60°.

2. Annular spring according to claim 1, **characterized in that** the annular body (2) extends over more than 240°, 260°, 280°, 300°, 320°, 340° or 360° in the circumferential direction.

3. Annular spring according to claim 1 or 2, **characterized in that** the circumferential angle range, within which the thickness can be constant, amounts to at most 40°, 30°, 20°, 10°, 5° or 2°.

4. Annular spring according to claim 1 or 2, **characterized in that** the thickness (d, D) increases continuously and proportionally to the circumferential angle.

5. Annular spring according to claim 3, **characterized in that** the thickness increases continuously and over- or under-proportionally to the circumferential angle.

6. Annular spring according to any one of the above claims, **characterized in that** the annular body has a cylindrical inner face.

7. Annular spring according to any one of claims 1 to 5, **characterized in that** the annular body has a cylindrical outer face.

8. Annular spring according to any one of claims 1 to 3, **characterized in that** the annular body (2) has a polygon form with straight sections, wherein the thickness (d₁ ... d₉) is constant in each section at least section by section or increases continuously over the circumferential angle.

9. Annular spring according to any one of the above claims, **characterized in that** the annular body in the direction of the ring axis (3) has a length (l, L), which corresponds to one - fifty times its largest thickness (D; d₉).

10. Annular spring according to any one of claims 1 to 9, **characterized in that** the annular body in the direction of the ring axis (3) has a length (l, L) which can vary with the circumferential angle.

11. Annular spring according to claim 10, **characterized in that** the length (l, L) from the first end (4) up to the second end (6) increases continuously or in steps.

12. Annular spring according to any one of the claims, **characterized in that** an angulation or an angle of bend (26) is arranged at the first end (4) and/or at the second end (6).

13. Spring arrangement comprising a first component (18), which is resiliently supported with an adjustable spring rate on a second component (20) by an annular spring (2) according to any one of the above claims.

14. Spring arrangement according to claim 13, **characterized in that** the annular spring can be adjusted within an adjustment range of at least 60°, 90°, or 120° circumferential angle.

## Revendications

1. Ressort-bague, approprié à des fins d'utilisation entre deux composants se déplaçant l'un vers l'autre et des points d'application de force diamétralement opposés les uns par rapport aux autres, relativement à un point central reposant sur un axe de bague, comportant un corps annulaire ouvert (2) réalisé en matière élastique, qui s'étend depuis une première extrémité (4) jusqu'à une seconde extrémité (6) sur un angle circonférentiel, relativement à l'axe de bague (3), de 220° au moins, **caractérisé en ce que** le corps annulaire (2) a une épaisseur radiale (d, D), relativement à l'axe de bague, qui va en augmentant depuis la première extrémité (4) jusqu'à la seconde extrémité (6) de manière continue ou par étapes, dans lequel l'épaisseur (d, D) est constante dans les limites d'une plage d'angle circonférentiel de 60° au plus.

2. Ressort-bague selon la revendication 1, **caractérisé en ce que** le corps annulaire (2) s'étend sur plus de 240°, 260°, 280°, 300°, 320°, 340° ou 360° dans le sens de la circonférence.

3. Ressort-bague selon la revendication 1 ou la revendication 2, **caractérisé en ce que** la plage d'angle circonférentiel, au sein de laquelle l'épaisseur peut être constante, équivaut à 40°, 30°, 20°, 10°, 5° ou 2° au plus.

4. Ressort-bague selon la revendication 1 ou la revendication 2, **caractérisé en ce que** l'épaisseur (d, D) va en augmentant de manière continue et de manière proportionnelle par rapport à l'angle circonférentiel.

5. Ressort-bague selon la revendication 3, **caractérisé en ce que** l'épaisseur va en augmentant de manière continue et de manière sur- ou sous-proportionnelle par rapport à l'angle circonférentiel.

6. Ressort-bague selon l'une quelconque des revendications précédentes, **caractérisé en ce que** le corps annulaire a une face intérieure cylindrique.

7. Ressort-bague selon l'une quelconque des revendications 1 à 5, **caractérisé en ce que** le corps annulaire a une face extérieure cylindrique.

8. Ressort-bague selon l'une quelconque des revendications 1 à 3, **caractérisé en ce que** le corps annulaire (2) a une forme de polygone avec des sections droites, dans lequel l'épaisseur (d₁... d₉) est constante dans chaque section au moins section par section ou va en augmentant de manière continue sur l'angle circonférentiel.

9. Ressort-bague selon l'une quelconque des revendications précédentes, **caractérisé en ce que** le corps annulaire dans le sens de l'axe de bague (3) a une longueur (l, L), qui correspond de un à cinquante fois son épaisseur la plus large (D ; d₉).

10. Ressort-bague selon l'une quelconque des revendications 1 à 9, **caractérisé en ce que** le corps annulaire dans le sens de l'axe de bague (3) a une longueur (l, L) qui peut varier en fonction de l'angle circonférentiel.

11. Ressort-bague selon la revendication 10, **caractérisé en ce que** la longueur (l, L) depuis la première extrémité (4) jusqu'à la seconde extrémité (6) va en augmentant de manière continue ou par étapes.

12. Ressort-bague selon l'une quelconque des revendications, **caractérisé en ce qu'**une angulation ou un angle de pliage (26) est agencé au niveau de la première extrémité (4) et/ou au niveau de la seconde extrémité (6).

13. Agencement à ressort comportant un premier composant (18), qui est supporté de manière élastique avec une raideur de ressort ajustable sur un second composant (20) par un ressort-bague (2) selon l'une quelconque des revendications précédentes.

14. Agencement à ressort, selon la revendication 13, **caractérisé en ce que** le ressort-bague peut être ajusté dans les limites d'une plage d'ajustement d'un angle circonférentiel de 60°, 90°, ou 120° au moins.
